# EUROPEAN PATENT SPECIFICATION

(11) **EP 0 907 879 B1**
(45) Date of publication and mention of the grant of the patent: **03.09.2003**
(21) Application number: 97930396.3
(22) Date of filing: 24.06.1997
(51) Int. Cl.: G01F 11/02, B05B 11/00, B29C 45/14

(54) **LIQUID DISPENSER AND METHOD FOR MANUFACTURING A LIQUID DISPENSER**
FLÜSSIGKEITSSPENDER UND SEIN HERSTELLUNGSVERFAHREN
DISTRIBUTEUR DE LIQUIDE ET PROCEDE DE FABRICATION D'UN DISTRIBUTEUR DE LIQUIDE

(30) Priority: 24.06.1996 DE 19625243; 15.04.1997 DE 19715709; 06.06.1997 DE 19723947; 09.06.1997 DE 29710012 U
(43) Date of publication of application: 14.04.1999
(60) Divisional application: 03004231.1
(73) Proprietor: Poulten & Graf GmbH, 97877 Wertheim/Main (DE)
(72) Inventor: FESSEL, Theodor, D-91522 Ansbach (DE); GRAF, Siegfried, D-97877 Wertheim (DE); GRAF, Hans, D-97892 Kreuzwertheim (DE)
(74) Representative: Grünecker, Kinkeldey, Stockmair & Schwanhäusser Anwaltssozietät
(86) International application number: EP9703319
(87) International publication number: WO97049974

(56) References cited:
- EP-A- 0 086 912
- EP-A- 0 542 241
- DE-A- 3 534 550
- DE-A- 4 334 750
- DE-C- 757 045
- US-A- 3 940 027
- US-A- 3 991 914
- US-A- 4 225 063
- US-A- 4 307 137
- US-A- 4 815 663
- US-A- 5 141 137
- US-A- 5 284 132
- PATENT ABSTRACTS OF JAPAN vol. 012, no. 371 (M-748), 5 October 1988 & JP 63 122509 A (TOYODA GOSEI CO LTD), 26 May 1988,

## Description

The present invention refers to a liquid dispenser according to the preamble portion of claim 1.

The present invention further relates to a method of manufacturing a liquid dispenser.

A liquid dispenser according to the preamble of claim 1 is known from EP-A-0542 241.

A liquid dispenser for dosing liquids from a reservoir is also known from DE 43 34 750 C2, said reservoir being provided with an adjustment device through which the supply quantity to be output is progressively adjustable precisely. The stroke length of a supplying plunger slidably received in a supplying and dosing cylinder is adjusted by this adjustment means. The supplying and dosing cylinder is made of a glass material resistant to the medium to be supplied. The supplying and dosing cylinder is provided with a measuring scale in the area of its outer surface.

The supplying cylinder is inserted into a valve block having an intake and an outlet valve into which an outlet or discharge tubule is screwed-in. H is known from US-A-4 225 063 to use injection moulding techniques to form parts of an atomizing pump assembly. It is an objective of the present invention is to improve a liquid dispenser of the above-mentioned kind in a manner that this dispenser enables a precise supply and dosing of the liquid to be dispensed and has an uncomplicated and inexpensive design.

This objective is solved by a liquid dispenser having the features of claim 1.

It is possible in a favorable manner by such a dispenser to severely reduce the manufacturing costs and assembly work of a liquid dispenser of that kind and to reliably ensure that the supplying and dosing cylinder is captively connected to the valve block in a sealing and mechanically proper manner.

The high supply and dosing precision of the liquid dispenser is preferably ensured in that the supplying and dosing cylinder is a glass cylinder, preferably a precision quartz glass cylinder. This is an advantageous possibility of supplying sensitive or aggressive media in a reliable manner. Furthermore, a reliable sealing between the supplying plunger and the glass cylinder is ensured by the especially high surface quality of the inner wall of the glass cylinder. Moreover, a glass cylinder of that kind enables an especially easy movement of the supplying plunger. This plunger preferably is a glass plunger or a glass plunger provided at least partially with a PTFE coating possibly by forming one or a plurality of sealing lips. If necessary, it is also possible to make the supplying and dosing cylinder of a ceramic material, in particular of a duroplastic material or of a thermoplastic material having a high melting point.

The valve block is preferably made of a plastic material resistant to chemicals, in particular of polypropylene, A valve block made of such a material is characterized by an especially high chemical durability. It is preferably set onto the vessel by means of an adapter (preferably also made of polypropylene) rotatably supported at the valve block.

The integral design of valve block and supplying cylinder is preferably realized in that the glass cylinder is encompassed by a plastic protective tube integrally formed with the valve block, said tube preferably consisting of plastic material resistant to chemicals, in particular polypropylene. The supply or dosing cylinder is thereby conveniently prevented from mechanical damage and glass splinters in case of glass breaking. The protective tube is formed in an advantageous manner in that this tube is connected to the outer wall of the supply cylinder in a fixedly adhering manner, i.e. that it is formed to be an inseparable composite body. In case of a damage of the glass cylinder, a release of possible splinters from the protective tube is excluded and a surprisingly inexpensive manufacture is enabled by keeping all precision and resistance criteria.

As an alternative, a ceramic cylinder or a plastic cylinder highly resistant to chemicals may also be used instead of the glass cylinder.

The glass cylinder is preferably embedded into protective tube by an injection moulding technique. That means that the intimate material compound between the glass cylinder and the encompassing protective tube (which is integral with the valve block) is achieved by injection-molding the glass cylinder in a mold.

This results in an especially reliable attachment of the cylinder within the protective tube and at the valve block. Moreover, an ideal sealing between the glass cylinder and the valve block is attained in an especially favorable manner.

An advantageous embodiment of the liquid dispenser if the protective tube and the valve block are formed integrally, is provided in that the valve block is formed with a skeleton structure with spaced webs separated by recesses. The liquid dispenser according to the invention can be manufactured by such an embodiment of the valve block in an especially economic manner and with a high rigidity. Considerable advantages will be achieved if the valve block is manufactured by a plastic injection molding process, since then the wall thicknesses in the valve block are widely uniform. Moreover, the individual functional sections of the valve block can easily be formed in such a skeleton structure.

The injection-molding of the supplying or dosing cylinder with a plastic material forming the protective tube leads to an especially stable embodiment of the supplying and dosing cylinder. To improve the (melting) connection between the tube and the supplying and dosing cylinder, it is possible in an advantageous manner to chemically treat the outer surface of the supplying and dosing cylinder. It is also possible to slightly roughen the outer surface of the supplying and dosing cylinder for example by sand blasting. Instead of using a supplying and dosing cylinder made of a glass material or a ceramic material, it is also possible to make the supplying and dosing cylinder of a different material, for example of a duroplastic material. When using a supplying and dosing cylinder of that kind, it turns out to be advantageous to create a bonding bridge by appropriately treating the outer surface of the supplying and dosing cylinder, whereby an especially tight bondage of the supplying and dosing cylinder at the protective tube is enabled.

According to a preferred embodiment, the plastics material is transparent . Thereby, the filling level of the supplying and dosing cylinder can be easily detected. The plastics material may be of polypropylene. The plastics material can also be translucent.

In case the plastics material is non-transparent, it is possible in an advantageous manner to provide window portions at least in sections, made of a transparent plastic.

Further preferred embodiments of the subject matter of the invention are described in the accompanying subclaims.

It is a further objective of the present invention to provide a method of manufacturing a liquid dispenser, in particular for a liquid dispenser according to claim 1, which can be easily manufactured at a constantly high utility value, in particular in view of a high dosing precision over long periods of time.

This objective is solved in an inventive manner by a method having the features of claim 12.

Therefore, a method is provided for manufacturing a liquid dispenser comprising the supplying and dosing cylinder and the valve block in which in the course of a plastic injection molding process the valve block is formed in the interior of a sleeve of a plastic material, and which is removed from the sleeve after curing of the plastic material. In the course of the plastic injection molding process forming the valve block, the protective tube is integrally formed with the valve block for receiving a supplying cylinder.

It is thereby possible in an advantageous manner to provide a cylinder/valve block unit by means of which the total assembly work is severely reduced when manufacturing a liquid dispenser.

According to a preferred embodiment of the method, an cylinder inserted into a form tool forming the supplying and dosing cylinder is provided with the protective tube. The cylinder made for example of a glass material is centered in an advantageous manner by a forming core. To avoid excessive thermal loads of the cylinder when contacting the hot plastic injected into the sleeve, the cylinder is pre-heated in an advantageous manner before contacting the plastic material. According to a preferred embodiment of the method, the cylinder is set onto the forming core with a tight fit. It is thereby avoided in an advantageous manner that the plastic material provided for forming the protective tube penetrates a gap portion formed between the glass cylinder and the forming core.

The front end of the cylinder is coated in an advantageous manner by the plastic material. The edges formed in the end portions of the cylinder are thereby covered in an inexpensive way, so that there is no risk of getting hurt. Moreover, it is possible to provide small conical extension in this end portion, which facilitates inserting a supplying and dosing plunger into the cylinder.

An especially advantageous embodiment of the method is provided in that the plastic material is injected into the sleeve at different locations. This on one hand leads in a favorable manner to an especially favorable flowing direction of the plastic material in the region of the supplying and dosing cylinder. On the other hand, the majority of the plastic material can be filled into the sleeve in a manner that this plastic material does not contact the supplying and dosing cylinder.

Different plastic materials can, in an advantageous manner, be injected into the sleeve at different locations. According to a preferred embodiment of the method, a transparent or translucent plastic material, preferably polypropylene, is injected into the area of the sleeve provided for receiving the supplying and dosing cylinder, and a dyed plastic material is injected into the sleeve provided for forming the valve block. It is also possible to inject an opaque plastic material into the supplying and dosing cylinder and into the sleeve provided for forming the valve block, said opaque plastic material having desired mechanical properties. The chronological course of the injection process of the respective plastic material is in an advantageous manner defined by a time table, so that it is for example ensured that the supplying and dosing cylinder is exclusively encompassed by a transparent plastic material.

Preferred embodiments of the method according to the invention are described in the accompanying subclaims.

The invention will now be explained in detail by means of preferred embodiments and accompanying drawings , wherein:
Fig. 1a is a longitudinal sectional view of a liquid dispenser according to a first embodiment,
Fig. 1b is a longitudinal sectional view of a liquid dispenser according to a second embodiment,
Fig. 2 is a simplified section through a form tool for forming the integral unit consisting of the valve block and the supplying and dosing cylinder for the above-mentioned embodiments,
Fig. 3 is a longitudinal section through an integral unit comprising a valve block and supplying and dosing cylinder,
Fig. 4 is a view of an alternative embodiment of a liquid dispenser-base unit in a longitudinal section,
Fig. 5 is a view of a single part of a preferred embodiment of an outlet means for a liquid dispenser-base unit according to Fig. 4,
Fig. 6 is a functional sketch for describing switching functions of the outlet means according to Fig. 5,
Fig. 7 is a further embodiment of a supplying and dosing cylinder with a valve block integrally formed therewith,
Fig. 8 is a valve block made in skeleton structure with an integrally formed supplying and dosing cylinder as well as an ejector conduit, not forming an embodiment of the present invention,
Fig. 9 is a further embodiment of a supplying and dosing device (liquid dispenser) having a valve block formed in skeleton structure, and a preferred embodiment of a discharge tubule,
Fig. 10 is a discharge tubule in lateral view,
Fig. 11 is an discharge tubule in lateral view (from the right according to Fig. 1), wherein the bent end is cut off,
Fig. 12 is an enlarged longitudinal section according to section A-B in Fig. 2 including the bent end section that is not shown there,
Fig. 13 is an enlarged axial view of the end section of the discharge tubule conduit according to Fig. 3 (view according to Fig. 1 from the left),
Fig. 14 shows a valve block having a receiver conduit, adapter sleeve and an integral protective tube of the supply unit of a liquid dispenser, wherein a glass or ceramic cylinder as a supplying and dosing cylinder of the supply unit of the liquid dispenser preferably encompasses the protective tube,
Fig. 15 shows a liquid dispenser with the receiver conduit according to Fig. 10 in a lateral view (schematically), wherein this embodiment corresponds to the embodiment according to Fig. 9 (in this case without a closing cap), and
Fig. 16 is a sectional view in the area of the receiving opening of the valve block.

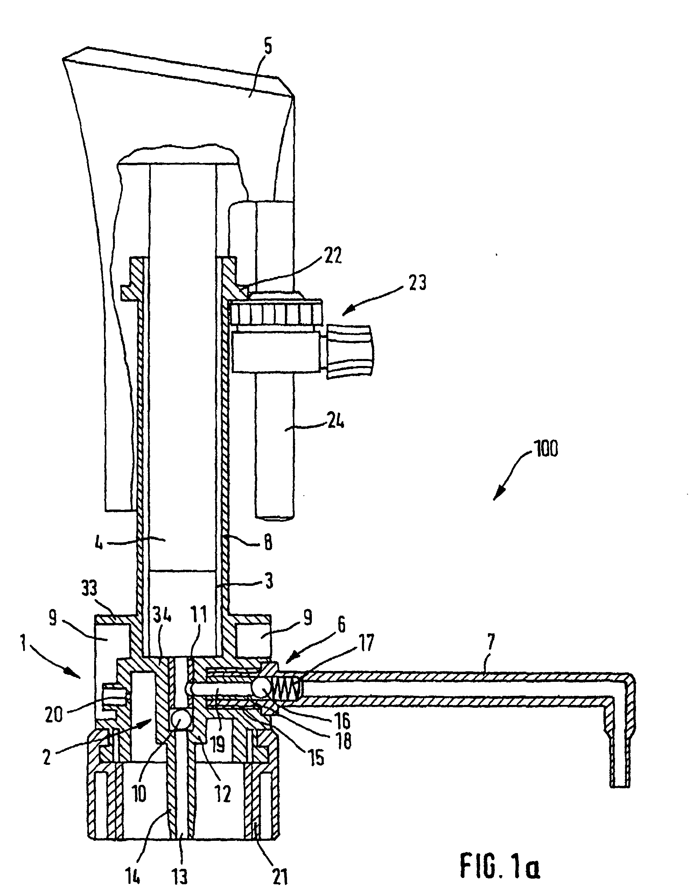

The liquid dispenser 100 shown in Fig.1a comprises a valve block 1 that can be set onto a vessel or installed into a laboratory pump means, with a valve means 2 provided in the interior of the valve block. An inner space formed in the supplying and dosing cylinder 3 communicates through this valve means 2 with the vessel or container (for example a canister), which is not shown. A supplying and dosing plunger 4 is accommodated in the supplying and dosing cylinder 3, said supplying and dosing plunger being slidably reciprocal by means of a handle 5. A liquid sucked in from the vessel or container and conveyed through the supplying and dosing cylinder 3 and the supplying plunger 4, e.g. a diluted solution, is supplied via the outlet means to a discharge tubule 7. The valve block 1 and the supplying and dosing cylinder 3 form an integral unit.

The valve block 1 of the embodiment that is shown consists of a plastic material, in particular of polypropylene. The supplying and dosing cylinder 3 is encompassed by a protective tube 8 integrally formed with the valve block 1. In the embodiment shown in the present connection, the supplying and dosing cylinder 3 is formed as a glass cylinder and is embodded into the protective tube 8 in the course of a plastic injection molding process. The glass cylinder 3 has a thickness (wall thickness) of for example 1 mm, whereas the surrounding protective tube 8 has a wall thickness of for example 2.5 mm. The wall thickness of the glass cylinder 4 is preferably at least 10% of the wall thickness of the protective tube 8 which is made of plastics. The protective tube 8 is made of a transparent or translucent plastic material, so that the filling level of the supplying and dosing chamber formed in the supplying and dosing cylinder 3 can be checked visually.

The supplying and dosing cylinder 3 is fixedly held in the protective tube 8 and the valve block 1. The supplying and dosing cylinder 3 is adherently connected to the protective tube.

The supplying plunger 4 is preferably a glass plunger or a glass plunger at least partially encompassed by PTFE, wherein this PTFE coating comprises at least a sealing lip.

The valve block 1 has a skeleton structure and comprises a number of webs 9, which define exposed recesses towards the outer side of the valve block 1.

The webs 9 that are shown in the present connection are arranged in a manner that the outer portion of the valve block does not form undercut portions in a two-piece form tool.

The valve means accommodated in the valve block 1 comprises a suction dosing valve which comprises a suction valve ball 10 that can be loaded with a spring (not shown), and that comprises a spacer sleeve 11 defining the stroke movement of this valve ball 10. A valve seat 12 of the valve means 2 is established by a circumferential edge formed at the valve block 1. This circumferential edge is formed in the opening portion of an intake duct 13, which in an advantageous manner extends coaxially to the longitudinal axis of the supplying cylinder 3. The intake duct 13 extends in the interior of a hose pin 14, which in an advantageous manner is also integrally formed with the valve block 1.

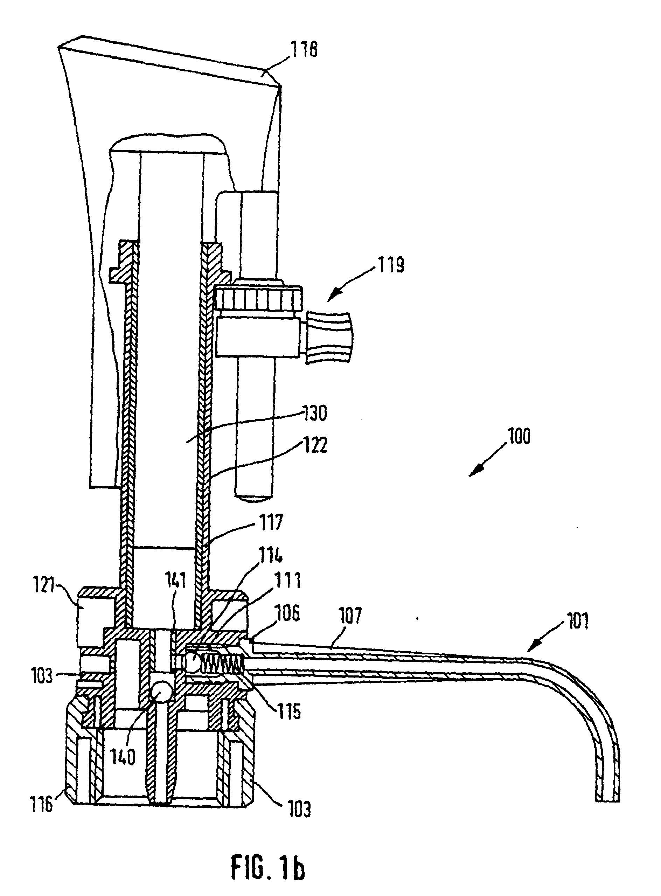

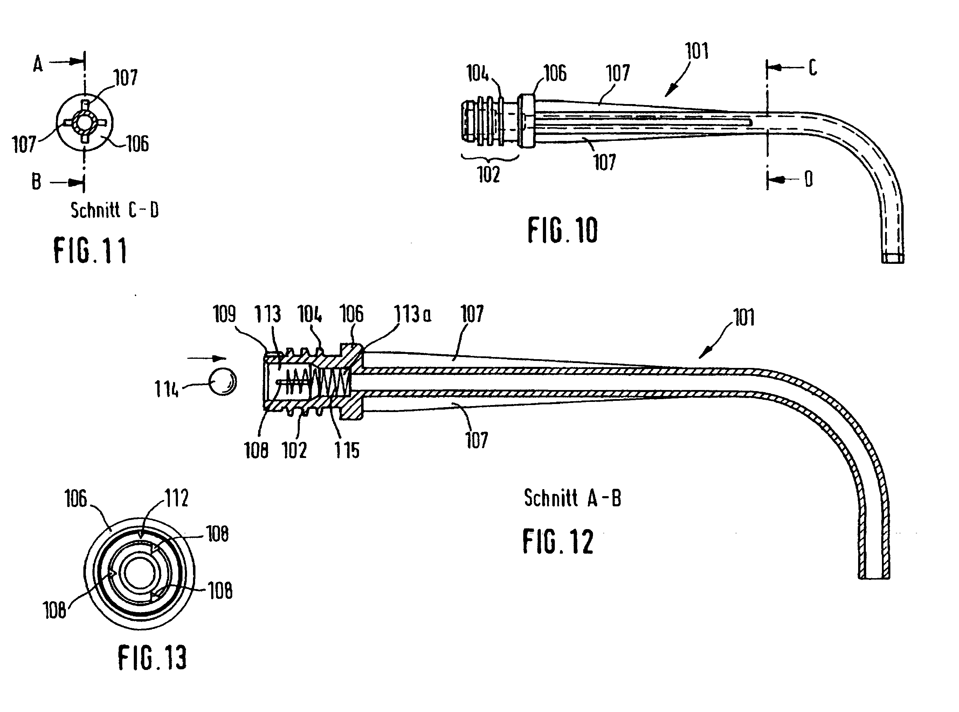

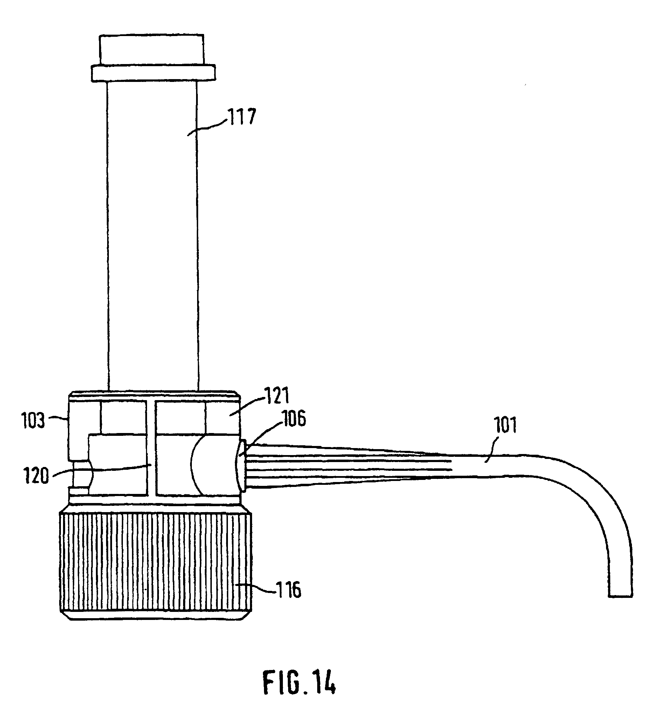

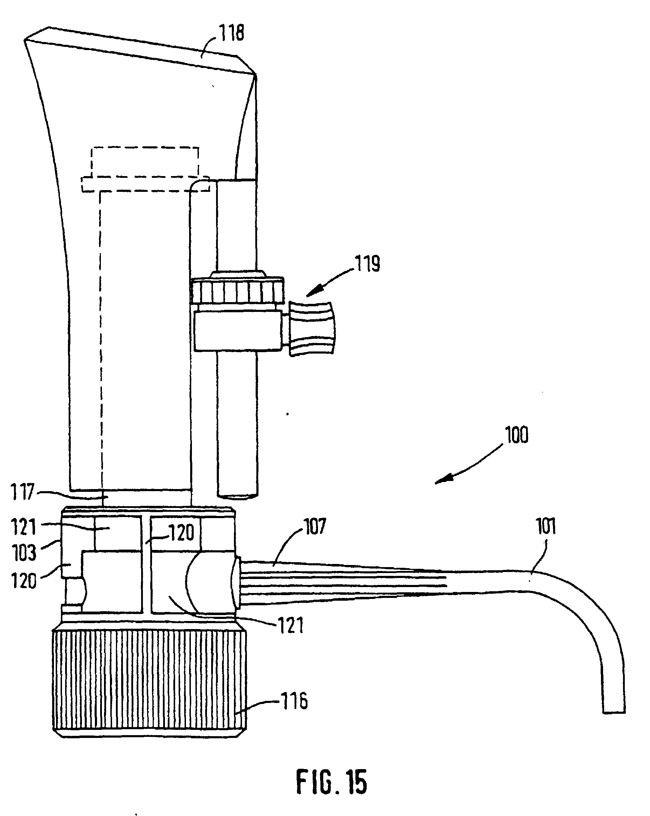

The foot section of the discharge tubule 7 is provided with a screw base 15 or with a coaxial sealing blade base (compare Fig. 10) and screwed by this base into the valve block 1 radially from the outside (Fig. 1) or it is captively pressed into this base (compare Fig. 10 to 16). The outlet means 6 preferably comprises a ball valve with an outlet valve ball 16 loaded by a spring 17. The outlet valve ball 16 is seated in dosing position on a sleeve 18, made in this case of plastics, which is inserted into the valve block 1.

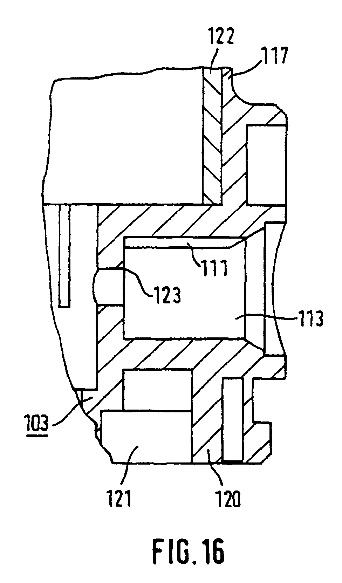

As an alternative, the valve seat can be attached without a sleeve directly at the valve block 1 or it can be formed by same (compare Fig. 1b, 10 to 16). The sleeve 18, the outlet valve 16 and the spring 17, in case of the thread or press seat design, are accommodated coaxially to the longitudinal axis of the discharge tubule 7 in the inner portion of the thread or press base 15. A passage channel formed in the interior of the sleeve 18 is in fluid communication with the supply space formed in the supplying and dosing cylinder 3. The sleeve 18 is also unnecessary. Such an embodiment is shown in Fig.1b, and 10 to 16. In this embodiment, an end portion 102 of the discharge tubule 107 forms an accommodating space 113 for the valve ball 114 which is pre-loaded by a pre-loading spring 115 against a circumferential edge in the valve block 103 as a valve seat 123 or in a separately pressed-in valve seat in the valve block (also compare Fig. 1b and 16)

A hose at a vessel is put onto the hose pin 14 before assembly of the liquid dispenser, said hose reaching down to the bottom of the vessel. In case of an upward movement of the supplying and dosing plunger 4, a fluid in the vessel is sucked in by the valve means 2 through this hose, Due to the pressure build-up in the interior of the supplying and dosing cylinder 3, the outlet valve 16 is forced out of its closing position opposite to the spring force of the spring 17 to an open position and enables a discharge of the fluid from the supplying and dosing space formed in the supplying and dosing cylinder 3 through the discharge tubule 7.

To permit a pressure compensation between the interior of the vessel and the surroundings when sucking in a fluid through the supplying plunger 4, the valve block 1 is provided with a ventilation bore 20, which is covered in an advantageous manner by a filter stopper consisting for example of a sintered granulate material. This filter stopper can be inserted into a preferably tapered insertion bore also provided at the valve block 1. The valve block 1 is sealingly attached at the vessel by means of an adapter (swivel nut). Instead of using a swivel nut 21 provided separately from the valve block, it is also possible to provide an appropriate threaded section which is formed integrally with the valve block 1.

A head section 22 integrally formed with the protective tube 8 is formed in the upper portion of the protective tube 8, said head section forming an abutment surface for a supplying stroke adjustment means 23. The head section 22 extends up to the uppermost axial end of the supplying and dosing cylinder 3 and, if necessary, it projects over the front end section of the supplying and dosing cylinder in a manner that the circumferential edges of this end portion are still covered by the plastic material of the protective tube 8.

The handle 5 provided in the liquid dispenser shown in the present connection is provided as a hollow body, and in lowered position of the supplying plunger the handle substantially fully covers the supplying and dosing cylinder 3 or the protective tube 8 encompassing same. According to a preferred embodiment, a scale rod 24 of the supplying stroke adjustment means 23 is formed integrally with the handle 5.

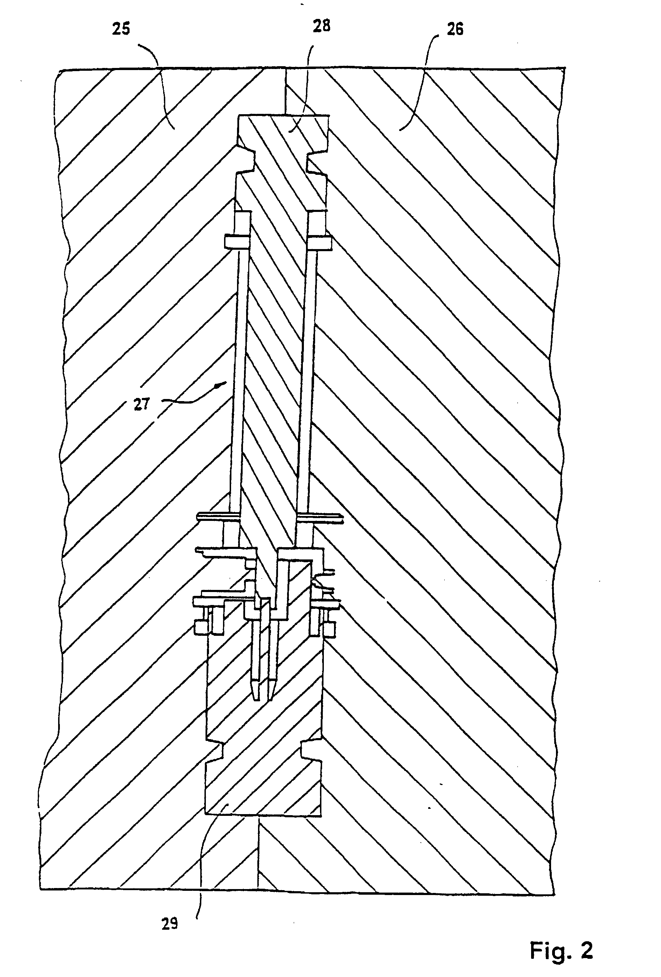

The device described before in connection with Fig. 1, which is formed by the valve block 1 and the supplying and dosing cylinder 3, is formed in accordance with a special aspect of the present invention by a form tool, the structural part of which provided for forming the outer portion of the valve block 1, being movable in a direction extending substantially transversely to the longitudinal direction of the supplying and dosing cylinder 3 in an opening or closing position. In the embodiment of a form tool shown in Fig. 2, this form tool comprises a first structural part 25 and a second structural part 26. Both structural parts 25 and 26 are movable in a direction transversely to the longitudinal direction of the unit formed by these structural parts. A first core element and a second core element 29 are disposed in a mold cavity defined between the two structural parts 25, 26. The first core element 28 defines together with the first structural part 25 and the second structural part 26 a sleeve section in which the plastic body provided for receiving the supplying cylinder is formed. Before closing the first and the second structural parts 25, 26, the insert cylinder, shown in Fig. 1, can be put onto this first core element 28. After inserting the second core element 29, the first and the second structural part 25, 26 are put together and a plastic material, which is preferably polypropylene, is injected into the sleeve 27 that is now formed. This plastic material fills out the entire sleeve 27 and thus forms an integral part of the liquid dispenser, which comprises the valve block 1 (Fig. 1) and the plastic body provided for receiving the supplying cylinder 3 and preferably also the discharge tubule 7. It is possible to manufacture different units in a simple manner, In particular regarding the stroke volume by replacing the first and the second core elements 28 and 29, in particular the first core element 28. Differing inner diameters of the supplying and dosing cylinders 3 can be taken into account in particular by an appropriate first core element 28.

The two first and second core elements 28 and 29 are centered by the first and second structural parts 25, 26. According to a preferred embodiment, the two core elements are additionally inserted into one another, in particular in an area provided for filling the intake channel 13 shown in Fig. 1. As an alternative to the embodiment of the form tool shown in Fig. 2, it is also possible to couple at least the second core element 29 with a drive means to permit an automatic demoulding of the structural part formed in the mold cavity 27. The demoulding movement of the first core element 28 may in accordance with a preferred embodiment also be automated. An especially reliable equipment of the first core element 28 with the supplying and dosing cylinder 3 is achieved in that the form tool is disposed in the injection mold in a manner that the valve block is disposed above the head section. In accordance with another preferred embodiment, the longitudinal axis of the first core element 28 substantially extends vertically, wherein a section of the first core element 28 provided for forming the first valve means 2 (Fig. 1) points upwardly. It is ensured in a preferred manner, that the supplying and dosing cylinder 3 cannot slip off the first core element 28 due to its own weight. The injection of the plastic material into the mold cavity 27 is also carried out in accordance with a preferred embodiment in a manner that the supplying and dosing cylinder 3 possibly inserted, is not displaced in the first core element 28. To reduce the thermal load on the supplying and dosing cylinder 3 when injecting the plastic material, the first core element 28 is pre-heated according to a preferred embodiment The pre-heating of the first core element 28 can be carried out, in accordance with a preferred embodiment, by an in particular electric heating means disposed in the interior of this core element 28.

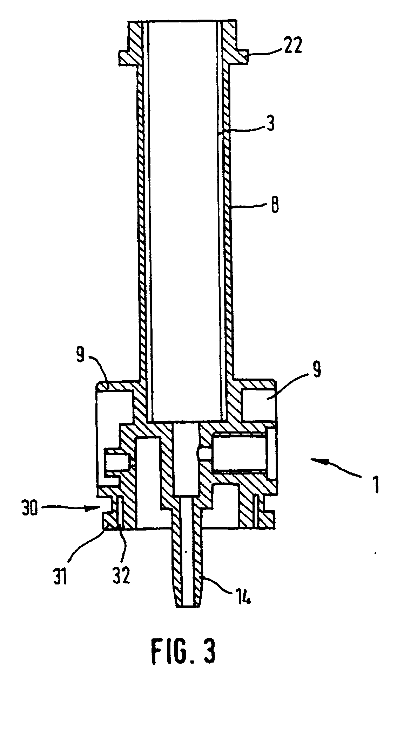

An integral unit for a liquid dispenser which is produced by a form tool according to Fig. 2 is for example shown in Fig. 3. This integral unit comprises the valve block 1 provided for accommodating the valve means 2, as well as a plastic body formed integrally with said valve block and defining the protective tube. The supplying and dosing cylinder 3 provided for receiving the supplying plunger 4 shown in Fig. 1 is embedded into this plastic body. The embedding of the supplying and dosing cylinder 3 into the plastic body is carried out in the course of a plastic injection molding process during which the valve body is formed together with the plastic body in an appropriate mold cavity. The head section 22 is formed at an end of the plastic body forming the protective tube, facing away from the valve body 1, said head section 22 forming an abutment surface which defines the stroke of the supplying plunger 4 in combination with a stroke limiting means. The valve block 1 integrally formed with the plastic body for receiving the supplying cylinder is formed as a skeleton structure with outwardly projecting webs 9. These webs 9 permit in a manner that saves material a sufficient reinforcement of the valve body 1.

The integral member shown in Fig. 3 also has provided thereon the hose pin 14 which is formed integrally with the valve block and which has already been described in connection with Fig. 1. The surroundings of the hose pin 14 may, according to a preferred embodiment, be formed by the second core element 29 shown in Fig. 2. The integral member shown in Fig. 3 is preferably attached by means of a swivel nut (Fig. 1) at a vessel, a container or a drive means. This swivel nut or a different suitable fastening means engages according to a preferred embodiment a circumferential groove 30 provided in the lower portion of the valve block 1. This circumferential groove is defined by an annular flange 31, which is resilient in the radial direction due to an annular groove 32 also formed in the valve block 1.

In the embodiment of the integral member shown in Fig. 3, the supplying and dosing cylinder 3 is even with the head section 22. As an alternative, it is also possible to make the supplying and dosing cylinder 3 shorter or to make the head section 22 longer. Furthermore, it is also possible to form all operational sections provided for the valve means of the liquid dispenser, at an insertion element, which is inserted or screwed-in into a recess into the valve block extending in particular radial to the longitudinal axis of the supplying cylinder 3.

According to a further embodiment, the discharge tubule 7 is not screwed into the valve block 1 through a threaded base, but is pressed into the valve block 1 through a preferably cylindrical press seat (compare Fig. 10 to 16). Such an attachment of the discharge tubule 7 at the valve block 1 turns out to be of special advantage in particular in view of the capability of sterilization of the liquid dispenser, since a much smaller gap between the two components is established compared to a threaded connection. As an altemative to such a press-fit of the foot portion of the discharge tubule 7 into the valve block 1, it is also possible to provide a shoulder similar to the pin hose 14 at the valve block, on which the discharge tubule 7 may be attached. In order to ensure an especially reliable sterilization of the liquid dispenser, the discharge tubule may also be drawn off the liquid dispenser.

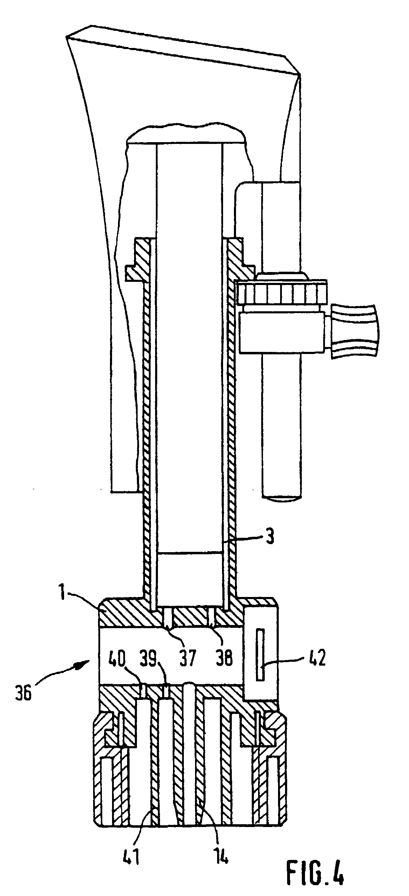

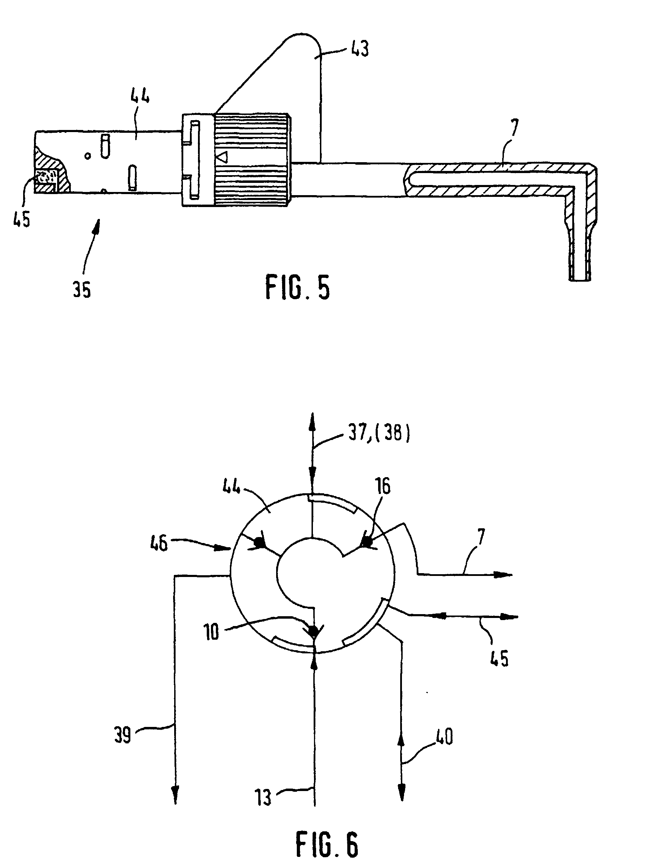

The embodiment of a liquid dispenser shown in Fig. 4 differs from the embodiment described before in combination with Fig. 1 by a switching mechanism accommodated in the valve block 1. This switching mechanism comprises a recess provided for accommodating a valve slide element 35 (Fig. 5). The recess is provided as a cylindrical through bore and extends continuously from a front side of the valve block 1 to a rear side of the valve block. A number of passage ducts run into the circumferential wall of the through bore.

In the embodiment shown in Fig. 4, these through bores are a cylinder intake duct 37, a cylinder outlet duct 38, the intake duct 13 already described in combination with Fig. 1, a flushing duct 39 and a ventilation duct 40. The cylinder intake duct 37 and the cylinder outlet duct 38 are provided as separate ducts in this embodiment. However, it is also possible, to combine these two ducts if the valve slide element 35 (Fig. 5) is designed appropriately, as has been done in the embodiment according to Fig. 1.

The ducts 37, 38, 39, 40 and 13 may, as will now be described in combination with Fig. 6, be brought to an opening or dosing position by operating the valve slide element 35. The flushing duct 39 is provided, in particular when taking the liquid dispenser into operation for the first time, or in case of a longer standstill of the dispenser, to return the fluid supplied by the supplying and dosing cylinder back to the vessel, until air bubbles are no longer generated in the intake hose or in the supplying and dosing cylinder.

According to a preferred embodiment, the flushing duct 39 opens into an annular space surrounding the hose pin 14. It is then possible in an advantageous manner that the fluid returned by the flushing duct flows back into the vessel on the outer wall of the hose put onto the hose pin 14 without splashing onto the wall of the vessel. According to a preferred embodiment, a cylinder pin 41 extending coaxially to the hose pin 14 is provided to form this annular space according to Fig. 4. This cylinder pin 41 on one hand enables an especially regular bypass flow of the intake hose (not shown) and, on the other hand, it prevents the ventilation duct 40 from contacting the fluid returned. The inner wall of the recess 36 forms an especially smooth surface. According to a preferred embodiment, the recess 36 can also be slightly conical, which leads to an extremely reliable sealing between the valve slide element 35 and the inner wall of the recess 36.

In the embodiment shown in Fig. 4, the valve slide element 35 is fixed in the valve body 1 by means of a bayonet socket. This bayonet socket comprises a lock-in projection formed at the valve body 1. To enable an especially effective cleaning of the dispenser and an especially effective sterilization of the liquid dispenser, it is provided according to a special aspect, that preferably the entire valve and switching mechanism can be removed from the valve block 1 in a simple manner, preferably without the aid of a tool. For this purpose, the recess 36 provided for accommodating the valve slide element 35 is accessible from the outside. The relatively large recess 36 furthermore enables an especially effective access of a cleaning or sterilization agent to the inner space formed in the supplying and dosing cylinder.

If necessary, the valve body 1 is provided with a plug device, by means of which the valve slide element 35 removed from the recess 36 can be attached to the valve body 1 or the liquid dispenser in a preferably upright position. A switching lug 43 (Fig. 5), integrally formed with the valve slide element 35 preferably serves as an attachment section. This switching lug 43 may be inserted into a groove formed at the valve block 1, so that it becomes possible to also put the disassembled liquid dispenser as a combined unit into a sterilization devices without the individual parts of the liquid dispenser lying loosely in the sterilizator or being mixed-up.

The valve mechanism provided in the valve block 1 described in combination with Fig. 4, may also be used in a liquid dispenser, in which the valve block 1 and the supplying and dosing cylinder 3 do not form an integral unit. It is also possible to insert an insertion element into the recess 36 provided in the valve block instead of the valve slide element 35, wherein said insertion element has, for example, just two check valves and does not allow any other switching operation between a flushing mode, a supplying mode and a blocking position. Such an insertion element is for example provided in a base version of the dispenser and can be perfectly exchanged with a valve slide element 35 that is designed accordingly. The valve block 1 and the supplying and dosing cylinder 3 then form a supplying module, the special operational properties of which being finally defined by the use of an appropriate valve slide element 35 or an appropriate insertion element. The described embodiment of the valve block can also be used according to a preferred embodiment without an insertion cylinder.

The valve slide element 35 shown in Fig. 5 is pivotally inserted into the recess 36 of the valve block. The maximum pivot range of the valve slide element 35 is defined by a stopper means. This stopper means is, according to a special aspect, formed by a bayonet socket means, which at the same time fixes the valve slide element 35 in the axial direction. The valve slide element 35 comprises a pin section 44, the circumferential surface of which forming a slide system together with the inner circumferential wall of the recess 36. By pivoting the pin section 44 to certain rotary positions, certain ducts formed in the valve block 1 become effective, i.e. they let liquid through, or become effective, i.e. closed.

According to a special aspect, it is possible by the valve mechanism to also block the vessel ventilation. If extremely volatile supply media are used, it is thereby avoided that vapor formed in the interior of the vessel escape from the vessel. The ventilation of the vessel is active only if the device is switched to a discharge or flushing state.

In order to prevent that an undesired high pressure is built up in the interior of the vessel, the ventilation means may additionally be provided with an overpressure valve means or a comparably small pressure compensation bore. According to a special aspect, the vessel ventilation means comprises a sintered granulate pin 45, which is inserted into the valve slide element 35.

A number of communication paths are provided in the pin section 44 of the valve slide element 35, said paths being open in a respective switching position of the valve slide element 35.

An embodiment that is of special advantage, not only in view of assembly points of view but also in view of the capability of sterilization of the liquid dispenser is provided in that preferably all valves (check valves) are disposed in the valve slide element 35. Three check valves in particular formed by spring-loaded balls are provided in the embodiment shown in Fig. 5 in the interior of the pin section 44. The respective valve seats of these check valves are, in accordance with a special aspect, integrally formed with the valve slide element 35. The discharge tubule 7 is, according to a preferred embodiment, also integrally formed with the valve slide element 35. The switching lug provided at the valve slide element 35 on one hand enables an especially ergonomic switching of the valve slide element and on the other hand represents a display means, by means of which the respective operating condition of the fluid dispenser can be easily recognized.

The function of a preferred embodiment of the valve slide element 35 will now be described in combination with Fig. 6. The pin section characterized in Fig. 6 by reference numeral 44, is pivotal clockwise and counter-clockwise about 30°. In the position shown, the pin section 44 is in an "outlet" position and enables an intake of the fluid over the intake channel 13 shown in a simplified manner as an arrow, as well as over the cylinder intake duct 37. During the intake process, the intake valve ball 10 takes an open position and enables a fluid passage through the check valve, which is shown in a simple manner in this case. When lowering the supplying plunger, the fluid is discharged into the cylinder outlet duct, characterized by reference numeral 38, wherein the outlet valve ball 16 takes an open position and enables a fluid passage to the outlet duct 7. During the intake of the fluid from the vessel over the intake duct 13, ambient air may flow into the vessel through the sinter granulate pin 45, shown in Fig. 5 as well as through the ventilation duct 40. If excess pressure prevails in the interior of the vessel, a respective amount of gas may also escape from the vessel via passages 40, 45. If the pin section 44 of the sketch that is shown here is pivoted about 30° in counter-clockwise direction, the connection between the discharge tubule 7 and the cylinder outlet duct 38 is interrupted, and the flushing duct 39 communicates via an additionally provided flushing check valve 46 with the interior of the supplying cylinder. It is possible in this switching position to supply a fluid sucked on by the intake duct 13, through the supplying and dosing cylinder back to the vessel over the flushing duct 39 by respective pump strokes of the supplying plunger.

In the embodiment of the valve means shown in Fig. 6 there is a communication during flushing between the interior of the vessel and the surroundings through the sinter granulate pin 45.

If the pin section 44 is pivoted from the position shown in Fig. 6 about an angle of 30° in clock-wise direction, the pin section blocks the intake duct 37, the outlet duct 38, the discharge tubule 7, preferably also the ventilation duct 40, the intake duct 13 and if necessary also the flushing duct 39. In this manner an undesired escape of the fluid or of vapor formed by the fluid is prevented in an especially reliable manner. Moreover, it is ensured in an advantageous manner that in case the supplying and dosing cylinder breaks or is separated from the valve block 1, the vessel can still safely be locked. Regarding Fig. 6, it has to be noted that the fluid paths that are shown in this Figure are shown schematically only and according to a preferred embodiment do not extend at one level. The check valves that are shown in this example are arranged in the interior of the pin section in a manner that the individual closing balls are movable radially to the longitudinal axis of the pin section 44. According to an alternative, advantageous embodiment, three longitudinal bores parallel to one another and parallel to the longitudinal axis of the pin section are provided in the pin section, the valve balls being accommodated in said longitudinal bores in a manner that these balls are movable in the longitudinal direction of the pin section 44. Appropriate valve springs are also inserted in these longitudinal bores.

According to a preferred embodiment, the recess 36 is formed by a glass or ceramic sleeve that is injected or, for example, formed into the valve body 1. This will permit an especially smooth movement of the valve slide body 35 in an advantageous manner.

Instead of providing the above-mentioned embodiment of the valve slide element 35 as a rotary slide valve, it is also possible in accordance with an alternative embodiment, to bring this valve slide element to different switching positions by movement along its longitudinal axis. According to a preferred embodiment, a through bore is provided at the valve slide element 35, with a lock in particular the shackle of a padlock being engageable with said through bore, whereby an unauthorized removal of liquid from the vessel can be prevented. Since the valve slide element 35 also blocks the fluid communication between the discharge tubule 7 and the vessel, fluid cannot be sucked out of the vessel if the valve slide element 35 is in a blocking position.

Since the ventilation of the vessel is also blocked in the closing position of the valve slide element 35, neither gas nor vapor can escape from the vessel nor can an exchange of particles with the surroundings take place.

According to a further aspect, the valve slide element 35 is constructed in such a manner that this element can be brought to a switching position in which the pump unit consisting of the supplying and dosing cylinder 3 and the supplying plunger 4 can also be used for sucking in the fluid from an external vessel. According to a preferred embodiment, a hose pin is formed for this purpose integrally with the valve body 1, wherein a hose leading to the external vessel can be put onto the hose pin.

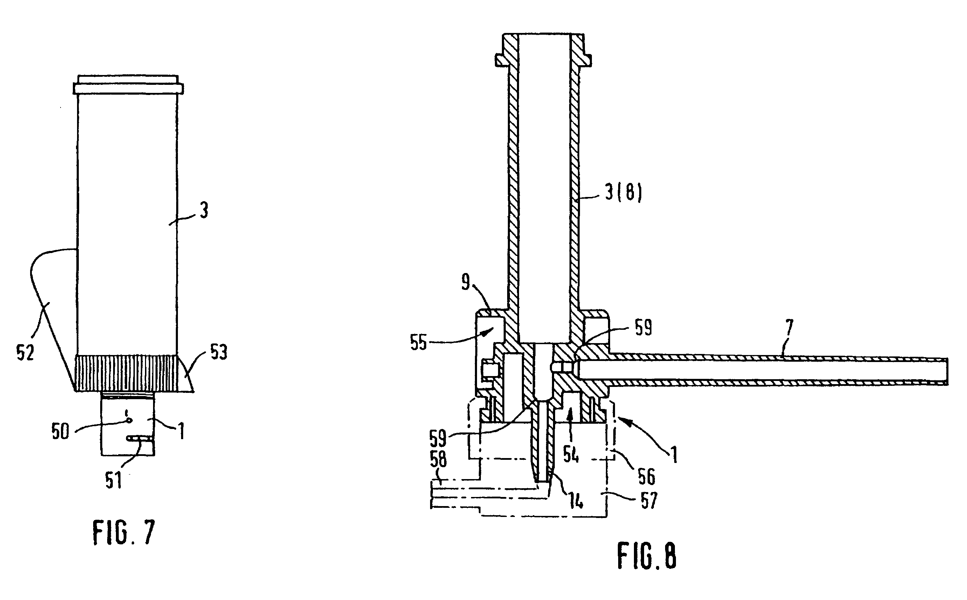

Fig. 7 shows a further embodiment of the valve block with an integrally formed supplying and dosing cylinder 3. The valve block 1 in the embodiment that is shown in this connection is provided in the shape of a cylindrical pin, which is inserted into a counter section complementary formed in a manner that this pin is pivotal about its longitudinal axis. The cylindrical pin has a fluid intake duct 51 and a fluid discharge duct 50. These two ducts may be brought into a fluid communication in accordance with the pivot position of the supplying and dosing cylinder with appropriate fluid ducts in the counter-part The pivot movement of the supplying and dosing cylinder 3 is facilitated by an operating section 52. The current switching position of the supplying and dosing cylinder 3 may be displayed, according to a preferred embodiment, by a display nose 53.

An insert cylinder is not provided in the embodiment of the valve block with an integrally formed supplying and dosing cylinder 3, that is shown in this connection, but the valve block as well as the supplying and dosing cylinder 3 are formed of a high-quality plastic material that is resistant to chemicals.

In Fig. 8 which is not an embodiment of the present invention, the valve block is integrally formed with the supplying and dosing cylinder 3. The discharge tubule 7 that is shown in this connection is also integrally formed with the valve body 1. A central axis of the discharge tubule 7 extends first of all in a straight line in the embodiment shown in this connection. The discharge tubule is bent in the course of a subsequent shaping step. The discharge tubule 7 is formed by molding a preferably cylindrical, straight-line mold core in the interior of a preferably also cylindrical mold cavity. As an alternative, it is also possible to form the discharge tubule 7 by molding a core with a preferably cylindrical cross-section, the longitudinal axis of which in particular extending in the shape of an arc of a circle. A valve seat mold section is provided at an end facing the longitudinal axis of the supplying and dosing cylinder, said end defining the inner wall of the discharge tubule, for forming a valve seat (59) in the interior of the valve block. In Fig. 8, the valve block 1, as well as in the embodiment according to Fig. 1, is also provided in a skeleton structure. In this case, the valve block 1 has a number of webs 9, which reinforce the entire valve block 1. The valve block comprises a bottom recess 54 formed substantially coaxially to the hose pin 14, said bottom recess extending at least section-wise almost fully to the interior space defined in the supplying and dosing cylinder 3. On a side facing away from the discharge tubule 7, the valve block is also provided with a recess 55, which is separated from the bottom recess 54 by a comparatively thinner wall section.

In Fig. 8, the valve block is screwed onto a supply block 57 by means of a swivel nut 56 which is shown just schematically in this connection, said supply block being attached to a motor-operated laboratory dosing device. The supply block is provided with an intake duct section 58 by means of which a medium to be dosed can be sucked in from a vessel means. The supply block 57 is additionally provided with a duct means, through which a fluid which is first of all sucked in through the supplying and dosing cylinder means can, if needed, be supplied back into the vessel, in particular for ventilating the supplying means.

The supplying plunger, which is not shown in this connection and which is provided for being accommodated in the supplying and dosing cylinder, is coupled with a drive means and is driven alternately by the aid of an electronic control means. A sealing means is provided in the supply block in order to create a secure sealing between the supply block 57 and the pin 14 originally provided as a hose pin. The circumferential surface of the pin 14 is slightly conical and can be brought into sealing engagement with a conical bore formed complementarily in the supply block 57.

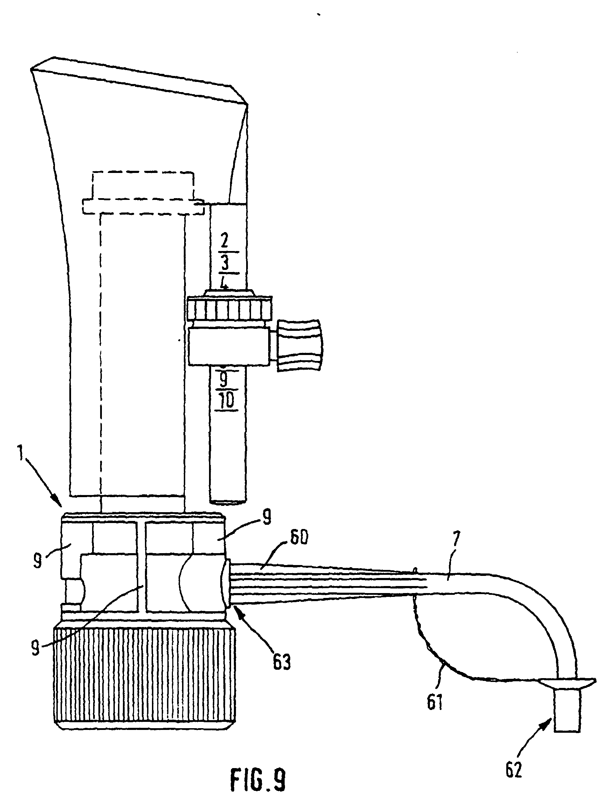

A special embodiment of the discharge tubule 7 is provided in the embodiment of the precision dosing device according to Fig. 9, said discharge tubule having a press-in section 63 which is pressed into the valve body 1. The press-in section 63 is provided with a number of sealing blades, which enable a secure sealing between the press-in section 63 and the valve body 1 and an especially tight seat of the discharge tubule 7 in the valve body 1. The attachment of the discharge tubule 7 at the valve body 1 by means of the press-in section 63 enables an especially position-precise attachment of the discharge tubule 7 at the valve block 1.

The discharge tubule 7 comprises a number of webs 60 by means of which the discharge tubule 7, in particular in its area facing the press-in section 63, is effectively reinforced. The webs are formed integrally with the discharge tubule 7. The discharge tubule 7 is manufactured by a plastic injection molding process.

An outlet opening of the discharge tubule 7 can be closed by means of a closing cap 62. The dosing cap 62 is connected to the discharge tubule 61 through a holding strap 61. According to a preferred embodiment, the closing cap 62 and the holding strap 61 are formed integrally with the discharge tubule 7.

The web 60 of the discharge tubule 7 as well as the webs formed at the valve block 1 are arranged in a cross-like manner in the embodiment shown in this connection. Through this, an especially effective reinforcement of these members and a favorable demoulding of the discharge tubule 7 or of the valve block 1 from the respective form tool is possible.

The embodiment of the discharge tubule 7 shown in this connection may be attached for example by means of a bayonet socket means at the valve block 1, or, as shown in the embodiment of Fig. 7, it may be formed integrally with the valve block 1.

The teaching of the present invention is not restricted to the embodiments described above. It is also possible for example to form an attachment means, which is provided for attaching the valve block 1 at a vessel, integrally with the valve block 1. Furthermore, it is also possible to use an especially duroplastic molding material for forming the integral unit instead of a plastic material injected in the course of a hot channel injection process.

Although it is preferred to use a glass cylinder as a supplying and dosing cylinder 3, which is encompassed by a polypropylene protective tube 8 (integral with the valve block), with a glass plunger as a dosing and supplying plunger (if needed with a PTFE coating, which preferably allows the formation of at least one sealing lip) sliding in this glass cylinder, the integral dosing unit can also be formed as a ceramic cylinder or as integral plastic member in the area of the cylinder wall (along which the supplying plunger slides). In such a case, a stabilization of the plastic material is of advantage for a precise dosing preferably by doping (dispersion) with a particulate material stabilizing the plastic material in the plastic melt (or as a subsequent or quenching film-forming lamination) with a mineral, ceramic metal or metal oxide powder material, such as glass dust (or particles) ceramic dust (or particles), Al₂O₃ or TiO₂.

Fig. 10 shows an embodiment of the discharge tubule 101, which comprises an end section 102 for attaching the same in a press-fit at the valve block 103 of the liquid dispenser. See cross-section of such a dispenser in Fig. 16. At the side of its discharge, the discharge tubule 101 comprises a discharge section which is bent in the usual manner vertically downwards, which can also be closed by a closing cap, which is set onto the discharge tubule 101 (see Fig. 9).

The end section 102 is limited by a radial flange 106, which at the same time shows the inset length of the intake tubule 101 in the valve block 103 shown in Fig. 13.

Reinforcing ribs 107 reducing in height and starting at the radial flange 106 are formed integrally along the discharge tubule 101. These ribs reinforce the discharge tubule 101.

The end section 102 comprises a plurality of axially spaced radial ribs 104 as well as an inset end section 109, the radial dimension of which being matched with an inner diameter of an accommodation opening 110 in a valve block (see Fig. 16) in a manner that a press seat is established between the end section and the accommodation opening of the valve block 103 and the discharge tubule 1 is captively pressed into and held in the valve block 103.

The radial projections 104 at the end section 102 of the discharge tubule 101 may therefore engage respective radially inwardly projecting counter projections of the accommodation opening 110 of the valve block 103 or with different latch means, such as latch recesses or bayonet socket latch means.

The accommodation opening 110 of the valve block 103 (see Fig. 16) comprises a wedge-shaped (triangular crass-section) inwardly projecting positioning projection 111, which engages a respective counter recess 112 (extending in the axial direction) in the area of the end section 102 of the discharge tubule 101 to ensure a circumferential position of the discharge tubule 1 at the valve block 3 and to determine the inset position of the discharge tubule 1 when pressed into the accommodation opening 10 of the valve block 103.

An accommodation chamber 113 is formed in the end section 102 of the discharge tubule 101 for accommodating a valve body 114 of a pressure valve provided in the valve block 103. The valve body is a glass or ceramic ball 114, which is held in the accommodation chamber by three guide projections 108 each arranged offset about 120° and positioned with axial possibilities of movement. In Fig. 12 the valve ball 114 is shown left outside the accommodation chamber 113. The valve elucidates its insertion direction.

A section 113c of the accommodation chamber 113 reduced in diameter is provided for receiving a preloading spring 115 (in particular a metal spring), which preloads the valve ball 114 against the valve seat 123 (which is pressed in either integrally or separately) provided in the valve block 103.

In Fig. 13 the valve block 103 is shown with a discharge tubule 101 inserted therein. At the lower end the valve block 103 (freely rotatable) has an adapter sleeve 116 in an annular groove, which is provided with an internal thread and which is provided for screwing the valve block 103 onto a vessel containing a fluid to be dispensed.

The valve block 103 is formed integrally with a protective tube 117, as can be seen from Fig. 1b, Fig. 16 at the same time it is encompassed by a glass cylinder 122, which forms a supplying and dosing cylinder of a liquid dispenser. A glass plunger 130 or a supplying plunger which is at least partially coated and if needed provided with a sealing lip is slidably received in the supplying and dosing cylinder, connected with a manual operating means 118 (handle sleeve) for moving upwards or pressing down the supplying plunger. The entire liquid dispenser 100 (including a supplying stroke adjustment device 119) is shown in Fig. 1b.This liquid dispenser 100 can thus be composed of a minimum amount of single parts, wherein the discharge tubule 101 is pressed into the valve block 103 with a press seat and sophisticated screw connections are avoided. Such a liquid dispenser 100 is not suitable for permanent use for dispensing solvents.

The valve block 103 consists of polypropylene or a different material resistant to chemicals as well as the protective tube integrally encompassing the glass cylinder 122. The same applies for the discharge tubule 101 and the adapter 118.

The valve block 103 has a skeleton structure with enforcement ribs 120 and interposed 121 hollow spaces. A suction valve body (ball) is referenced as 140 in Fig. 1b kept in the valve block 103 by a restricted sleeve 141. Instead of a manual operation by the handle sleeve 118, a motive operation of the supplying and dosing plunger can also be provided. In connection herewith (but also in case of a manual operation), an in particular contactless path measuring means, in particular an electric or electronic, electro-optical, optical or magnetic or infrared measuring means, connected with an electronic display means may be provided.

## Claims

1. A liquid dispenser adapted to supply and to dose an adjustable amount of liquid comprising
a valve block (1) adapted to be connected to a reservoir or to be attached onto a vessel, accommodating an intake valve (2) and an outlet means (6),
a supplying and dosing cylinder (3) connected to the intake valve (2), being surrounded by a protective tube (8) made of a plastics material, a supplying and dosing plunger (4) which is slidably accommodated in said supplying and dosing cylinder (3) being slidable by means of an operating means (5), and
a discharge means (7) connected to said valve block (1),
**characterized in that**
the protective tube (8) is closely adhering to the supplying and dosing cylinder (3) and is defining an inseparable composite body therewith, and said protective tube (8) is formed integrally with said valve block (1).

2. A liquid dispenser according to claim 1, **characterized in that** said supplying and dosing cylinder (3) is a glass cylinder, a ceramic cylinder or a cylinder of an especially high-quality plastic material which is resistant to chemicals.

3. A liquid dispenser according to claim 1 or 2, **characterized in that** the supplying and dosing cylinder (3) consists of a plastic material in which a stabilizing particulate material, in particular a mineral, ceramic metal or metal oxide powder material, such as glass particles, in particular glass dust, ceramic particles, Al₂O₃ or TiO₂ are dispersed.

4. A liquid dispenser according to at least one of the preceding claims 1 to 3, **characterized in that** said valve block (1) and said protective tube (8) are formed integrally by injection molding.

5. A liquid dispenser according to at least one of the preceding claims 1 to 4, **characterized in that** said supplying and dosing cylinder (3) is embedded in the protective tube (8), by an injection moulding technique

6. A liquid dispenser according to at least one of the preceding claims 1 to 5, **characterized in that** said valve block (1) is formed as a skeleton structure with spaced webs (9) which are formed by recesses.

7. A liquid dispenser according to at least one of the preceding claims 1 to 6, **characterized in that** a wall thickness of the protective tube (8) is at least 10% of the wall thickness of the glass cylinder.

8. A liquid dispenser according to claim 7, **characterized in that** the wall thickness of the protective tube (8) is approximately 1 mm and the wall thickness of the glass cylinder is approximately 2.5 mm.

9. A liquid dispenser according to at least one of the preceding claims 1 to 8, **characterized in that** said protective tube (8) and/or said valve block (1) are made from a transparent or translucent plastic material.

10. A liquid dispenser according to at least one of the preceding claims 1 to 9, **characterized in that** the protective tube (8) integrally comprises an upper end abutment and/or a foot base at the side of the valve block.

11. A liquid dispenser according to at least one of the preceding claims 1 to 10, **characterized in that** said protective tube (8) comprises an elongation section protruding over the supplying and dosing cylinder (3) in the axial direction, said elongation section forming a guide section for guiding the supplying and dosing plunger (4).

12. A method of manufacturing a liquid dispenser, in particular a liquid dispenser according to claim 1, comprising a valve block made of a plastics material and a supplying and dosing cylinder made of glass, ceramic or a further plastics material, said method comprising the steps of:
forming said valve block (1) and a protective tube (8) integrally by injection-molding, wherein said protective tube (8) is adapted to encompass said supplying and dosing cylinder (3) in a closely adhering manner, said protective tube (8) and said supplying and
dosing cylinder (3) forming an inseparable composite body.

13. Method according to claim 12, **characterized in that** said protective tube is formed around said supplying and dosing cylinder during said injection-molding step wherein said supplying and dosing cylinder is centered by a mold core (28).

14. Method according to claim 12 or 13, **characterized in that** said mold cavity (27) is brought into an open position by opening in a direction transversely to the longitudinal direction of the supplying and dosing cylinder.

## Patentansprüche

1. Flüssigkeitsdispenser, der zum Fördem und Dosieren einer einstellbaren Menge einer Flüssigkeit vorgesehen ist, mit
- einem Ventilblock (1), der mit einem Vorratsbehälter verbindbar oder auf ein Gefäß aufsetzbar ist und der ein Ansaugventil (2) und ein Ausgabemittel (6) aufnimmt,
- einen mit dem Ansaugventil (2) verbundenen Förder- und Dosierzylinder (3), der von einem Schutzrohr (8) aus Kunststoffmaterial umgeben ist,
- einem Förder- und Dosierkolben(4), der gleitbeweglich in dem Förder- und Dosierzylinder (3) aufgenommen und der mittels eines Betätigungsmittels (5) gleitbewegbar ist, und
- einem mit dem Ventilblock (1) verbundenen Austrittsmittel (7),
**dadurch gekennzeichnet, dass**
das Schutzrohr (8) an dem Förder- und Dosierzylinder (3) eng anhaftet und mit diesem einen untrennbaren Verbundkörper bildet und das Schutzrohr (8) einstückig mit dem Ventilblock (1) ausgebildet ist.

2. Flüssigkeitsdispenser nach Anspruch 1, **dadurch gekennzeichnet, dass** der Förder- und Dosierzylinder (3) ein Glaszylinder oder ein Keramikzylinder oder ein Zylinder aus einem besonders hochwertigen chemikalienbeständigen Kunststoffmaterial ist.

3. Flüssigkeitsdispenser nach Anspruch 1 oder 2, **dadurch gekennzeichnet, dass** der Förder- oder Dosierzylinder (3) aus einem Kunststoffmaterial besteht, in dem ein stabilisierendes Partikelmaterial, insbesondere ein mineralisches, keramisches Metall- oder Metalloxidpulvermaterial, wie Glaspartikel, insbesondere Glasstaub, Keramikpartikel, Al₂O₃ oder TiO₂ dispergiert sind.

4. Flüssigkeitsdispenser nach zumindest einem der vorherigen Ansprüche 1 bis 3, **dadurch gekennzeichnet, dass** der Ventilblock (1) und das Schutzrohr (8) einstückig durch einen Spritzgießvorgang ausgebildet sind.

5. Flüssigkeitsdispenser nach zumindest einem der vorherigen Ansprüche 1 bis 4, **dadurch gekennzeichnet, dass** der Förder- und Dosierzylinder (3) in das Schutzrohr (8) durch eine Spritzgießtechnik eingebettet ist.

6. Flüssigkeitsdispenser nach zumindest einem der vorherigen Ansprüche 1 bis 5, **dadurch gekennzeichnet, dass** der Ventilblock (1) in Skelettkonstruktion mit beabstandeten Stegen (9), die durch Ausnehmungen gebildet sind, ausgebildet ist.

7. Flüssigkeitsdispenser nach zumindest einem der vorherigen Ansprüche 1 bis 6, **dadurch gekennzeichnet, dass** eine Wanddicke des Schutzrohrs (8) zumindest 10% der Wanddicke des Glaszylinders (3) beträgt.

8. Flüssigkeitsdispenser nach Anspruch 7, **dadurch gekennzeichnet, dass** die Wanddicke des Schutzrohrs (8) etwa 1 mm und die Wanddicke des Glaszylinders (3) etwa 2,5 mm beträgt.

9. Flüssigkeitsdispenser nach zumindest einem der vorherigen Ansprüche 1 bis 8, **dadurch gekennzeichnet, dass** das Schutzrohr (8) und/oder der Ventilblock (1) aus einem transparenten oder transluzenten Kunststoffmaterial gefertigt sind.

10. Flüssigkeitsdispenser nach zumindest einem der vorherigen Ansprüche 1 bis 9, **dadurch gekennzeichnet, dass** das Schutzrohr (8) einstückig einen oberen Endanschlag und/oder einen ventilblockseitigen Fußsockel aufweist.

11. Flüssigkeitsdispenser nach zumindest einem der vorherigen Ansprüche 1 bis 10, **dadurch gekennzeichnet, dass** das Schutzrohr (8) einen sich über den Förderund Dosierzylinder (3) in Axialrichtung hinaus erstreckenden Verlängerungsabschnitt aufweist, der einen Führungsabschnitt zur Führung des Förder- und Dosierkolbens (4) bildet.

12. Verfahren zur Herstellung eines Flüssigkeitsdispensers, insbesondere eines Flüssigkeitsdispensers nach Anspruch 1, mit
- einem aus einem Kunststoffmaterial bestehenden Ventilblock und
- einem aus Glas, Keramik oder einem weiteren Kunststoffmaterial bestehenden Förder- und Dosierzylinder,
wobei das Verfahren folgende Schritte aufweist:
einstückiges Ausbilden des Ventilblocks (1) und des Schutzrohrs (8) durch Spritzgießen, wobei das Schutzrohr (8) angepasst ist, den Förder- und Dosierzylinder (3) eng anhaftend zu umfassen und das Schutzrohr (8) und der Förder- und Dosierzylinder (3) einen untrennbaren Verbundkörper bilden.

13. Verfahren nach Anspruch 12, **dadurch gekennzeichnet, dass** das Schutzrohr während des Spritzgußschrittes um den Förder- und Dosierzylinder herum ausgebildet wird, wobei der Förder- und Dosierzylinder durch einen Formkem (28) zentriert wird.

14. Verfahren nach Anspruch 12 oder 13, **dadurch gekennzeichnet, dass** der Formraum (27) durch Öffnen in eine Richtung quer zur Längsrichtung des Förder- und Dosierzylinders in eine Offenstellung gebracht wird.

## Revendications

1. Distributeur de liquide adapté pour alimenter et doser une quantité ajustable de liquide, comportant :
un bloc de soupape (1) adapté pour être relié à un réservoir ou être fixé sur un récipient, recevant une soupape d'admission (2) et des moyens de sortie (6),
un cylindre d'alimentation et de dosage (3) relié à la soupape d'admission (2), qui est entouré par un tube de protection (8) constitué d'une matière plastique, et un piston d'alimentation et de dosage (4) qui est reçu de manière coulissante dans ledit cylindre d'alimentation et de dosage (3) en pouvant coulisser par l'intermédiaire de moyens d'actionnement (5), et
des moyens d'évacuation (7) reliés audit bloc de soupape (1),
**caractérisé en ce que**
le tube de protection (8) est collé étroitement sur le cylindre d'alimentation et de dosage (3) et définit un corps composite inséparable avec celui-ci, et ledit tube de protection (8) est formé en un seul bloc avec ledit bloc de soupape (1).

2. Distributeur de liquide selon la revendication 1, **caractérisé en ce que** ledit cylindre d'alimentation et de dosage (3) est un cylindre en verre, un cylindre en céramique ou un cylindre constitué d'une matière plastique de qualité particulièrement grande qui résiste aux produits chimiques.

3. Distributeur de liquide selon la revendication 1 ou 2, **caractérisé en ce que** le cylindre d'alimentation et de dosage (3) est constitué d'une matière plastique dans laquelle une matière particulaire de stabilisation, en particulier un minéral, un cermet ou une matière en poudre d'oxyde métallique, telle que des particules de verre, en particulier de la poussière de verre, des particules de céramique, Al₂O₃ ou TiO₂ sont dispersées.

4. Distributeur de liquide selon l'une quelconque des revendications 1 à 3 qui précèdent, **caractérisé en ce que** ledit bloc de soupape (1) et ledit tube de protection (8) sont formés en un seul bloc par moulage par injection.

5. Distributeur de liquide selon l'une quelconque des revendications précédentes, **caractérisé en ce que** ledit cylindre d'alimentation et de dosage (3) est enrobé dans le tube de protection (8), par une technique de moulage par injection.

6. Distributeur de liquide selon l'une quelconque des revendications précédentes, **caractérisé en ce que** ledit bloc de soupape (1) est formé sous la forme d'une structure d'ossature ayant des âmes espacées (9) qui sont formées par des évidements.

7. Distributeur de liquide selon l'une quelconque des revendications précédentes, **caractérisé en ce que** l'épaisseur de paroi du tube de protection (8) est au moins 10 % de l'épaisseur de paroi du cylindre de verre.

8. Distributeur de liquide selon la revendication 7, **caractérisé en ce que** l'épaisseur de paroi du tube de protection (8) est approximativement de 1 mm et l'épaisseur de paroi du cylindre de verre est approximativement de 2,5 mm.

9. Distributeur de liquide selon l'une quelconque des revendications précédentes, **caractérisé en ce que** ledit tube de protection (8) et/ou ledit bloc de soupape (1) sont constitués d'une matière plastique transparente ou translucide.

10. Distributeur de liquide selon l'une quelconque des revendications précédentes, **caractérisé en ce que** le tube de protection (8) comporte en un seul bloc une butée d'extrémité supérieure et/ou une base de pied du côté du bloc de soupape (1).

11. Distributeur de liquide selon l'une quelconque des revendications précédentes, **caractérisé en ce que** ledit tube de protection (8) comporte un tronçon de prolongement faisant saillie au-dessus du cylindre d'alimentation et de dosage (3) dans la direction axiale, ledit tronçon de prolongement formant un tronçon de guidage pour guider le piston d'alimentation et de dosage (4).

12. Procédé de fabrication d'un distributeur de liquide, en particulier un distributeur de liquide selon la revendication 1, comportant un bloc de soupape constitué d'une matière plastique et un cylindre d'alimentation et de dosage constitué de verre, d'une céramique ou d'autres matières plastiques, ledit procédé comportant les étapes consistant à :
former ledit bloc de soupape (1) et un tube de protection (8) en un seul bloc par moulage par injection, ledit tube de protection (8) étant adapté pour entourer ledit cylindre d'alimentation et de dosage (3) d'une manière collant étroitement, ledit tube de protection (8) et ledit cylindre d'alimentation et de dosage (3) formant un corps composite inséparable.

13. Procédé selon la revendication 12, **caractérisé en ce que** ledit tube de protection est formé autour dudit cylindre d'alimentation et de dosage pendant ladite étape de moulage par injection dans laquelle ledit cylindre d'alimentation et de dosage est centré par un noyau de moule (28).

14. Procédé selon la revendication 12 ou 13, **caractérisé en ce que** ladite cavité de moule (27) est amenée dans une position ouverte par ouverture dans une direction transversale à la direction longitudinale du cylindre d'alimentation et de dosage.
